# EUROPÄISCHE PATENTANMELDUNG

(11) **EP 4 083 580 A1**
(43) Veröffentlichungstag der Anmeldung: **02.11.2022**
(21) Anmeldenummer: 21171467.0
(22) Anmeldetag: 30.04.2021
(51) Int. Cl.: G01F 1/69, G01B 21/18, B60L 3/00, B60L 58/10, H01M 10/0525

(54) **SENSOREINHEIT ZUR DETEKTION VON GASSTRÖMEN IN EINEM BATTERIEBLOCK ODER IN EINER BATTERIEEINHEIT, BATTERIEBLOCK, BATTERIEEINHEIT UND VERFAHREN ZUR DETEKTION VON GASSTRÖMEN IN EINEM BATTERIEBLOCK ODER IN EINER BATTERIEEINHEIT**

(71) Anmelder: Heraeus Nexensos GmbH, 63801 Kleinostheim (DE)
(72) Erfinder: ASMUS, Tim, 63801 Kleinostheim (DE); NICK, Christoph, 63801 Kleinostheim (DE); PITZIUS, Peter, 63801 Kleinostheim (DE); WIENAND, Karlheinz, 63741 Aschaffenburg (DE)
(74) Vertreter: Kilchert, Jochen

(57) **Zusammenfassung**

Die Erfindung betrifft eine Sensoreinheit 1 zur Detektion von Gasströmen 29 in einem Batterieblock 20 oder in einer Batterieeinheit, wobei die Sensoreinheit 1 einen Träger 2 und mindestens einen Widerstandstemperaturfühler 5, 6 aufweist, wobei der mindestens eine Widerstandstemperaturfühler 5, 6 mindestens sechs Seiten, nämlich eine Oberseite 30, eine Unterseite 31 und vier Stirnseiten 32, aufweist. Der Widerstandstemperaturfühler 5, 6 ist erfindungsgemäß derart mit dem Träger 2 verbunden, dass die Oberseite 30, die Unterseite 31 und mindestens zwei Stirnseiten 32 zumindest abschnittsweise von einem Gas umströmbar sind.

## Beschreibung

Die Erfindung betrifft eine Sensoreinheit zur Detektion von Gasströmen in einem Batterieblock oder in einer Batterieeinheit. Des Weiteren betrifft die Erfindung einen Batterieblock mit mehreren in einem Gehäuse befindlichen Batteriezellen. Ferner betrifft die Erfindung eine Batterieeinheit mit mehreren in einem Batterieeinheitsgehäuse befindlichen Batterieblöcken. Außerdem betrifft die Erfindung ein Verfahren zur Detektion von Gasströmen in einem Batterieblock oder in einer Batterieeinheit.

Der Bedarf nach wiederaufladbaren Batterien mit hoher Energie- und Leistungsdichte ist seit der breiten Kommerzialisierung elektrisch angetriebener Fahrzeuge sprunghaft angestiegen. Derzeit gelten Lithium-Ionen-Batterien als Speicher mit der höchsten Energiedichte bezüglich verfügbarer Akkumulatoren. Daher werden Lithium-Ionen-Batterien seit geraumer Zeit bevorzugt in mobilen Endgeräten, die keine permanente Verbindung zu einem elektrischen Verbundnetz haben, eingesetzt. Der Wunsch nach immer größer werdenden Batterien mit hoher Leistung steigt. Um dies zu erreichen, werden einzelne Lithium-Ionen-Zellen zu Batterieblöcken in Serie und in Reihe geschaltet. Es ist jedoch bekannt, dass während des Betriebs von derartigen Batterieblöcken innerhalb einzelner Zellen Kurzschlüsse auftreten können, die wiederum Kettenreaktionen auslösen können. Derartige sicherheitsrelevante Störungen, die als "thermal runaway" bezeichnet werden, müssen somit frühzeitig erkannt werden, um geeignete Gegenmaßnahmen, wie ein sofortiges Abschalten des betreffenden Batterieblocks einleiten zu können.

Aus dem Stand der Technik sind eine Vielzahl von Verfahren bekannt, die ein frühzeitiges Erkennen, des "thermal runaway" ermöglichen.

Unter anderem existieren Konzepte, die die Gasentwicklung innerhalb eines Batterieblocks oder der gesamten Batterieeinheit als Indikator für eine Störung in einer Zelle nutzen. Bei einem "thermal runaway" treten in einer Zelle unkontrollierte elektrochemische Prozesse auf, die zu einer plötzlichen Gasentwicklung führen. Derartig freiwerdende Gase können beispielsweise durch die auftretenden Gasvolumenflüsse innerhalb des Batterieblocks nachgewiesen werden. Des Weiteren ist es möglich, einen chemischen Nachweis bestimmter Gase mittels geeigneter Gasdetektoren zu führen.

US 2019/0379030 A1 schlägt beispielsweise vor, mit einem Gassensor über Konzentrationen einer Gasspezies, insbesondere von CO₂, CO, H₂, O₂, NOₓ, O₃, H₂O Hydrocarbone (CH₄), in einer Gaszirkulationseinheit, die ein Teil des Batteriesystems ist, nachzuweisen. Des Weiteren wird eine Methode vorgeschlagen, die beim Auftreten abnormaler Bedingungen Gegenmaßnahmen initiiert.

In KR 102 181 521 B wird ein Batteriemodul vorgeschlagen, wobei eine Gaskühlungsventilator-Einrichtung im Gehäuse ausgebildet ist. Diese Gaskühlungs-Ventilatoreinheit wird bei Detektion freiwerdender Gase, die bei Überladung einer Batteriezelle entstehen, abgeschaltet.

EP 2 358 432 B1 schlägt hingegen ein Batteriemodul vor, das ein Überwachungsmittel aufweist. Mit Hilfe des Überwachungsmittels wird die Konzentration eines Gases im Temperierfluid innerhalb des Batteriegehäuses überwacht.

In EP 3 300 162 B1 wird hingegen ein Batteriemodul offenbart, das eine Vielzahl von Detektionseinheiten innerhalb des Batteriemoduls zum Nachweis von Gasen aufweist.

EP 2 797 158 A1 schlägt ein Batteriesystem vor, das aus mehreren Batterieuntereinheiten besteht. Jede Batterieuntereinheit ist mit einem Gaslecksensor ausgestattet, der im Abflussbereich des kühlenden Gasstroms angeordnet ist und Anomalitäten im Gasstrom erkennt. Aufgrund von detektierten Anomalitäten im Gasstrom kann beispielsweise initiiert werden, dass ein Abflusslüfter mehr Luftvolumen aus dem Gehäuse fördert als ein Zuluftventilator an Luftvolumen in das Gehäuse fördert.

Ausgehend von dem Vorgenannten ist es Aufgabe der vorliegenden Erfindung, eine weiterentwickelte Sensoreinheit anzugeben, mit deren Hilfe es ermöglicht wird, frühzeitige Störungen innerhalb einer Batterie zu erkennen. Insbesondere sollen sogenannte "thermal runaways" bereits in der Entstehungsphase mittels einer weiterentwickelten Sensoreinheit detektierbar sein.

Des Weiteren ist es Aufgabe der vorliegenden Erfindung, einen weiterentwickelten Batterieblock anzugeben, der hinsichtlich einer im Batterieblock befindlichen Sensoreinheit weiterentwickelt ist.

Des Weiteren ist es Aufgabe der vorliegenden Erfindung, eine weiterentwickelte Batterieeinheit anzugeben, die insbesondere hinsichtlich einer Sensoreinheit zur Detektion von Gasströmen weiterentwickelt ist. Ferner besteht eine Aufgabe der vorliegenden Erfindung darin, ein weiterentwickeltes Verfahren zur Detektion von Gasströmen in einem Batterieblock und/oder in einer Batterieeinheit anzugeben. Mit Hilfe eines weiterentwickelten Verfahrens soll insbesondere ein schnelleres Erkennen des "thermal runaways" ermöglicht werden als dies mit bislang bekannten Verfahren möglich ist.

Erfindungsgemäß wird diese Aufgabe im Hinblick auf eine Sensoreinheit durch den Gegenstand des Anspruches 1, im Hinblick auf einen Batterieblock durch den Gegenstand des Patentanspruches 7, im Hinblick auf eine Batterieeinheit durch den Gegenstand des Patentanspruches 10, und im Hinblick auf ein Verfahren zur Detektion von Gasströmen in einem Batterieblock oder in einer Batterieeinheit durch den Gegenstand des Anspruches 13 gelöst.

Die Erfindung beruht auf dem Gedanken, eine Sensoreinheit zur Detektion von Gasströmen in einem Batterieblock, oder in einer Batterieeinheit anzugeben, wobei die Sensoreinheit einen Träger und mindestens einen Widerstandstemperaturfühler aufweist. Der mindestens eine Widerstandstemperaturfühler weist mindestens sechs Seiten, nämlich eine Oberseite, eine Unterseite und vier Stirnseiten, auf, wobei der Widerstandstemperaturfühler derart mit dem Träger verbunden ist, dass die Oberseite, die Unterseite und mindestens zwei Stirnseiten zumindest abschnittsweise von einem Gas umströmbar sind.

Die Erfindung beruht somit auf dem Gedanken, einen Widerstandstemperaturfühler mit einem Träger derart zu verbinden, dass der Widerstandstemperaturfühler hinsichtlich der Oberseite, der Unterseite und mindestens zwei Stirnseiten zumindest abschnittsweise von einem Gas umströmbar ist. Mit einer derartigen Sensoreinheit ist es möglich, sehr schnell und äußerst genau, kleinste Bewegungen des Gasvolumens und somit kleinste Änderungen des Gasdrucks zu detektieren.

Als Oberseite und Unterseite eines Widerstandstemperaturfühlers sind die Seiten zu verstehen, die bei Auflage einer Sensoreinheit auf einer (gedachten) horizontalen Ablagefläche nach oben (Oberseite) bzw. nach unten (Unterseite) weisen. Die Ablage erfolgt dabei derart, dass der Träger der Sensoreinheit auf der (gedachten) horizontalen Ablagefläche aufliegt.

Bei den vier Stirnseiten handelt es sich um die vier zusätzlichen Seiten eines im Wesentlichen quaderförmigen Elements. Die vier Stirnseiten bilden mit anderen Worten die vier weiteren Umfangsseiten eines quaderförmigen Elements. Die vier Stirnseiten sind im Wesentlichen senkrecht zu der Oberseite sowie zur Unterseite ausgebildet. Herstellungsbedingt kann es hier hinsichtlich einer senkrechten Anordnung zu entsprechenden Varianten kommen.

Aufgrund der vorgesehenen Verbindung des Widerstandstemperaturfühlers mit dem Träger derart, dass die Oberseite, die Unterseite und mindestens zwei Stirnseiten zumindest abschnittsweise von einem Gas umströmbar sind, kann bereits ein vergleichsweise geringer Gasstrom detektiert werden.

Vorzugsweise ist der mindestens eine Widerstandstemperaturfühler an höchstens zwei Abschnitten einer Seite, vorzugsweise an der Unterseite, mittel- oder unmittelbar mit dem Träger verbunden. Die beschriebene Verbindung des Widerstandstemperaturfühlers mit dem Träger betrifft hierbei vorrangig die bauliche Verbindung mit dem Träger. Mit anderen Worten betrifft die Verbindung die Anordnung des Widerstandstemperaturfühlers in Relation zum Träger sowie zur Befestigung. Die Verbindung betrifft vorrangig nicht die elektrische Verbindung des Widerstandstemperaturfühlers mit dem Träger. Allerdings kann die beschriebene bauliche Verbindung zusätzlich auch eine elektrische Verbindung betreffen bzw. eine derart kombinierte Verbindung (baulich und elektrisch) ermöglichen.

Sofern der Widerstandstemperaturfühler an höchstens zwei Abschnitten einer Seite, vorzugsweise an der Unterseite, mit dem Träger verbunden ist, ist es möglich, dass die Oberseite, sowie die vier Stirnseiten vollständig von einem Gas umströmbar sind. Die Unterseite ist aufgrund der Verbindung des Widerstandstemperaturfühlers mit dem Träger zumindest abschnittsweise, vorzugsweise überwiegend, von einem Gas umströmbar. Bei einer derartigen Befestigungskonfiguration ist somit der Widerstandstemperaturfühler mit Ausnahme der zwei Abschnitte zur Verbindung des Widerstandstemperaturfühlers vollständig von einem Gas umströmbar.

In einer Ausführungsform der Erfindung ist es möglich, dass der Widerstandstemperaturfühler mit dem Träger mittels Adhäsion verbunden ist. Beispielsweise kann der Widerstandstemperaturfühler mit dem Träger verklebt sein.

In einer weiteren Ausführungsform der Erfindung ist es möglich, dass der Widerstandstemperaturfühler mit dem Träger mittels eines Sintermaterials verbunden ist.

In wiederum einer weiteren Ausführungsform der Erfindung ist es möglich, dass die Verbindung des Widerstandstemperaturfühlers mit dem Träger gleichzeitig eine elektrische Kontaktierung darstellt. Hierbei ist es möglich, dass der Widerstandstemperaturfühler mindestens einen, vorzugsweise mindestens zwei Kontaktpads aufweist. Der Widerstandstemperaturfühler ist in einer derartigen Ausführungsform der Erfindung vorzugsweise als Flipchip-Sensor ausgestaltet. Hierbei weist ein Widerstandstemperaturfühler auf einer Seite, vorzugsweise auf der Unterseite, jeweils zwei Kontaktpads auf. Über diese Kontaktpads werden die Widerstandstemperaturfühler beispielsweise mit weiteren Kontaktpads des Trägers mechanisch und elektrisch verbunden. Die tatsächliche Verbindung erfolgt vorzugsweise über eine metallhaltige Sinterpaste oder einen Leitkleber.

Es ist möglich, dass der Träger mindestens zwei Befestigungslaschen aufweist, wobei die mindestens zwei Befestigungslaschen zueinanderweisend ausgebildet sind und der mindestens eine Widerstandstemperaturfühler an den Befestigungslaschen mittel- oder unmittelbar mit dem Träger mechanisch verbunden ist. Vorzugsweise ist der Widerstandstemperaturfühler bei einer derartigen Ausführungsform der Erfindung an den höchstens zwei Abschnitten einer Seite, vorzugsweise der Unterseite, mit den zwei genannten Befestigungslaschen verbunden.

Als Befestigungslaschen eines Trägers sind vorzugsweise von weiteren Trägerabschnitten (seitliche) abstehende Laschen zu verstehen. Zwischen mindestens zwei Befestigungslaschen ist vorzugsweise kein weiteres Trägermaterial ausgebildet. Mit anderen Worten sind die mindestens zwei Befestigungslaschen beabstandet zueinander ausgebildet, wobei der Abstand zwischen den mindestens zwei Befestigungslaschen bzw. der jeweils zueinandergeordneten Befestigungslaschen als Freiraum oder als Materialaussparung ausgebildet ist.

Vorzugsweise weist mindestens eine Befestigungslasche eine im Vergleich zu angrenzenden Trägerabschnitten zumindest abschnittsweise eine geringere Dicke und/oder einen geringeren Querschnitt auf. Bevorzugt weisen die mindestens zwei Befestigungslaschen jeweils eine im Vergleich zu angrenzenden Trägerabschnitten zumindest abschnittsweise geringere Dicke und/oder einen geringeren Querschnitt auf. Im Bereich der verringerten Dicke bzw. des verringerten Querschnittes wird somit zusätzlicher Raum zur Verfügung gestellt, der hinsichtlich einer verbesserten Gasströmung vorteilhaft ist. Die Umströmung des Gases um den Widerstandstemperaturfühler kann je nach am Sensorort auftretender Gasgeschwindigkeit turbulent oder laminar sein.

Der über wesentliche Abschnitte frei umströmbare Widerstandstemperaturfühler mit typischen Ausdehnungen im Millimeterbereich stellt in dieser Geometrie ein strömungsdynamisch kleines Hindernis dar, welches turbulente Gasstromanteile induzieren kann und den Wärmeübertrag an die Gasphase noch mehr begünstigen kann.

Der mindestens eine Widerstandstemperaturfühler ist erfindungsgemäß derart mit dem Träger verbunden, dass der Widerstandstemperaturfühler in einem guten thermischen Kontakt mit dem umgebenden Gas steht und gleichzeitig die Wärmeableitung vom Widerstandstemperaturfühler zum Träger minimal ist. Die beschriebenen Befestigungslaschen verbessern diesen Punkt erheblich.

In einer besonders bevorzugten Ausführungsform der Erfindung weist die Sensoreinheit mindestens zwei Widerstandstemperaturfühler auf.

Es ist möglich, dass der Träger zwei Längsenden aufweist, wobei an jedem Längsende ein Widerstandstemperaturfühler ausgebildet ist. Mit anderen Worten sind zwei Widerstandstemperaturfühler an zwei Längsenden des Trägers der Sensoreinheit angeordnet.

Sofern eine Sensoreinheit mindestens zwei Widerstandstemperaturfühler aufweist, sind die Widerstandstemperaturfühler vorzugsweise gleichartig ausgebildet.

Als Widerstandstemperaturfühler eignen sich insbesondere massearme Temperatursensoren. Besonders bevorzugt handelt es sich bei dem mindestens einen Widerstandstemperaturfühler um einen platinbasierten Temperatursensor, wie beispielsweise einen Pt1000 oder Pt10000-Sensor.

Derartige Sensoren weisen sowohl einen hohen Temperaturkoeffizienten als auch einen hohen Grundwiderstand auf. Der Grundwiderstand R₀ beträgt beispielsweise 1000 Ohm oder gar 10000 Ohm bei 0 °C. Daher sind derartige Sensoren aufgrund hoher Temperaturkoeffizienten und aufgrund eines hohen Grundwiderstandes sehr sensitiv. Aufgrund dessen können kleine Temperaturänderungen äußerst genau detektiert werden.

Des Weiteren verfügen derartige massearme Temperatursensoren aufgrund der geringen Masse über eine schnelle Ansprechzeit und über eine hohe Eigenerwärmung. Die Eigenerwärmung kann dabei größer 180 K/W sein.

Massearme Temperatursensoren eignen sich besonders zur Verwendung bei einer erfindungsgemäßen Sensoreinheit, da über den gesamten relevanten Temperaturbereich sowohl die Sensitivität als auch die Genauigkeit konstant ist.

Vorzugsweise befindet sich unterhalb der Unterseite des mindestens einen Widerstandstemperaturfühlers überwiegend kein Abschnitt des Trägers. Mit anderen Worten sind unterhalb der Unterseite des mindestens einen Widerstandstemperaturfühlers überwiegend keine Abschnitte des Trägers ausgebildet.

Vorzugsweise sind unterhalb der Unterseite des mindestens einen Widerstandstemperaturfühlers lediglich derartige Abschnitte des Trägers ausgebildet, die zur Verbindung des Widerstandstemperaturfühlers mit dem Träger dienen.

Bevorzugt ist unterhalb der Unterseite des mindestens einen Widerstandstemperaturfühlers ein Freiraum ausgebildet. Dieser Freiraum ist insbesondere bei einer Ablage der Sensoreinheit auf einer (gedachten) Ablagefläche derart, dass der Träger auf der Ablagefläche aufliegt, sichtbar. In vertikaler Erstreckung sind vorzugsweise zwischen der Unterseite des Widerstandstemperaturfühlers und der (gedachten) Auflagefläche überwiegend keine Abschnitte des Trägers ausgebildet. Überlappungsbereiche mit Abschnitten des Trägers sind vorzugsweise lediglich bezüglich der Verbindungsabschnitte des Widerstandstemperaturfühlers mit dem Träger ausgebildet.

Der mindestens eine Widerstandstemperaturfühler ist derart auf dem Träger positioniert und mit dem Träger verbunden, dass der Widerstandstemperaturfühler in einem guten thermischen Kontakt mit dem umgebenden Gas steht und gleichzeitig die Wärmeableitung vom Widerstandstemperaturfühler zum Träger minimal ist.

In einer bevorzugten Ausführungsform der Erfindung wird dies dadurch realisiert, indem der Träger mindestens eine Aussparung oder Einbuchtung aufweist, wobei der mindestens eine Widerstandstemperaturfühler diese Aussparung oder Einbuchtung überspannt.

Vorzugsweise wird der Widerstandstemperaturfühler lediglich an zwei Abschnitten, die jeweils zwei seitliche Endabschnitte bilden, mit dem Träger verbunden. Dies bezieht sich auf eine bauliche Verbindung des Widerstandstemperaturfühlers mit dem Träger und nicht zwangsläufig eine elektrische Verbindung, wobei eine kombinierte elektrische Verbindung nicht ausgeschlossen ist.

Eine derartige Verbindung des mindestens einen Widerstandstemperaturfühlers mit dem Träger weist mehrere Vorteile auf. Zum einen ist eine derartige Verbindung des Widerstandstemperaturfühlers mit dem Träger relativ steif und verhindert ein mechanisches Schwingen des Widerstandstemperaturfühlers relativ zum Träger. Des Weiteren kann aufgrund dieser Verbindung ein großer Anteil des Widerstandstemperaturfühlers von einem Gas umströmbar ausgebildet sein. Insbesondere können sowohl die Ober- als auch die Unterseite größtenteils in direktem thermischen Kontakt mit dem umgebenden Gas stehen.

Des Weiteren ist die Wärmeableitung über thermische Brücken über dem Widerstandstemperaturfühler und dem Träger minimal. Dies ist auf die geringe Kontaktfläche bzw. Verbindungsfläche zwischen dem Widerstandstemperaturfühler und dem Träger zurückzuführen.

Eine weitere Reduzierung der Wärmeleitung von dem mindestens einen Widerstandstemperaturfühler zum Träger wird dadurch realisiert, dass eine mögliche Befestigungslasche ebenfalls relativ massearm ausgebildet ist. Es ist möglich, dass die vorzugsweise mindestens eine Befestigungslasche gleichzeitig eine elektrische Kontaktierung mit dem mindestens einen Widerstandstemperaturfühler ermöglicht.

Wie bereits erläutert, kann mindestens eine Befestigungslasche eine geringere Dicke als angrenzende Trägerabschnitte aufweisen. Des Weiteren ist es möglich, dass die mindestens eine Befestigungslasche eine im Vergleich zu einem angrenzenden Trägerabschnitt einen geringeren Querschnitt aufweist. Dies ermöglicht zusammenfassend das Ausbilden einer massearmen Befestigungslasche. Des Weiteren ist es möglich, dass mindestens eine Befestigungslasche auf der Oberfläche, d. h. auf der zum Widerstandstemperaturfühler weisenden Oberfläche mindestens eine Zuleitung oder mindestens ein Kontaktpad aufweist.

Des Weiteren ist es möglich, dass der Träger und/oder die Befestigungslaschen Perforationen aufweisen. Mit Perforationen sind z.B. Löcher im Träger und/oder Befestigungslachen gemeint, vorzugsweise in der Nähe der Verbindungsstellen mit dem Widerstandstemperaturfühler. Dies ermöglicht es, den relevanten Querschnitt des Trägers und/oder der Befestigungslaschen zu reduzieren und eine Wärmeableitung des Widerstandstemperaturfühlers über den Träger zu minimieren.

Bei dem mindestens einen Widerstandstemperaturfühler, der vorzugsweise massearm ausgebildet ist, kann es sich z. B. um ein SMD-Bauteil handeln. Des Weiteren ist es möglich, dass der mindestens eine Widerstandstemperaturfühler eine temperaturempfindliche Platin-Struktur aufweist, die auf ein Substrat abgeschieden wurde. Ein derartiges Substrat eines Widerstandstemperaturfühlers kann auf eine minimale Dicke reduziert werden.

Die beschriebenen Ausführungsformen hinsichtlich eines Widerstandstemperaturfühlers (SMD-Bauteil oder temperaturempfindliche Platin-Struktur auf Substrat) ermöglichen es, einen dynamischen Widerstandstemperaturfühler zur Verfügung zu stellen. Ein derartiger Widerstandstemperaturfühler weist eine geringe Ansprechzeit und maximalen Signalhub auf.

Vorzugsweise weist der mindestens eine Widerstandstemperaturfühler eine Masse von weniger als 20 mg, vorzugsweise weniger als 10 mg, besonders bevorzugt weniger als 5 mg, auf.

Es ist möglich, dass der Widerstandstemperaturfühler ein SMD-Bauteil ist. Derartige SMD-Bauteile weisen eine besonders kleine Bauteilgröße auf.

Es ist außerdem möglich, dass ein derartiges SMD-Bauteil als Flipchip ausgebildet ist. Mit anderen Worten kann der mindestens eine Widerstandstemperaturfühler ein SMD-Flipchip-Sensor sein. Ein derartiges Bauteil kann sowohl baulich als auch elektrisch mit dem Träger im gleichen Verbindungsschritt verbunden werden.

Alternativ ist es möglich, dass SMD-Flipchip-Sensoren an zwei Enden mittels einer Klebung mit dem Träger, insbesondere mit Befestigungslaschen des Trägers, baulich verbunden werden. Eine elektrische Verbindung kann über Drähte, die beispielsweise durch Bonding oder Löten mit Kontaktpads des Trägers, insbesondere mit Kontaktpads an den Befestigungslaschen, verbunden werden, hergestellt werden.

In wiederum einer weiteren Ausführungsform ist es möglich, dass der mindestens eine Widerstandstemperaturfühler mittels Anschlussdrähten sowohl baulich als auch elektrisch mit dem Träger verbunden ist. Eine derartige Befestigung und entsprechende Positionierung eines Widerstandstemperaturfühlers kann als freischwebende Positionierung des mindestens einen Widerstandstemperaturfühlers bezeichnet werden. Bei einer derartigen Ausführungsform der Erfindung ist es möglich, dass der mindestens eine Widerstandstemperaturfühler über den Träger hinausragt.

Insbesondere bei der Ausbildung von mindestens zwei Widerstandstemperaturfühlern ist es möglich, dass mindestens ein Widerstandstemperaturfühler besonders geschützt auf dem Träger angeordnet ist. Vorzugsweise handelt es sich bei dem geschützt angebrachten Widerstandstemperaturfühler um einen Referenzwiderstandstemperaturfühler. Eine geschützte Positionierung und Verbindung eines mindestens einen Widerstandstemperaturfühlers kann beispielsweise mittels einer Hülse oder Kappe oder anderen Passivierungsbauteilen oder Passivierungsoptionen erfolgen.

Der Träger der Sensoreinheit kann beispielsweise als Epoxy-Leiterplatte ausgebildet sein. Es ist möglich, dass der Träger aus standardmäßig bekannten Leiterplattenmaterialien gebildet ist.

In einer besonders bevorzugten Ausführungsform der Erfindung ist der Träger symmetrisch ausgebildet. Die symmetrische Ausbildung des Trägers, die insbesondere die diesbezügliche Positionierung von beispielsweise mindestens zwei Widerstandstemperaturfühlern betrifft, hat den Vorteil, dass eine Wärmeableitung ohne einen vorhandenen Gasstrom auf beiden Seiten gleich ist. Mit anderen Worten sind bei einer Ausführung von mindestens zwei Widerstandstemperaturfühlern bei einer symmetrischen Ausgestaltung des Trägers beide Widerstandstemperaturfühler den gleichen Einflüssen ausgesetzt.

Ein weiterer Aspekt der Erfindung betrifft einen Batterieblock mit mehreren in einem Gehäuse befindlichen Batteriezellen, insbesondere Lithium-Ionen-Batteriezellen, wobei das Gehäuse mindestens eine Gehäuseöffnung aufweist und in dem Gehäuse mindestens eine erste erfindungsgemäße Sensoreinheit befindlich ist.

Vorzugsweise ist die erste Sensoreinheit derart im Gehäuse positioniert, dass der mindestens eine Widerstandstemperaturfühler vor der Gehäuseöffnung derart positioniert ist derart, dass der Widerstandstemperaturfühler in einem etwaigen vom Gehäuseinneren in Richtung der Gehäuseöffnung strömenden Gasstrom befindlich ist. Vorzugsweist ist, sofern die Sensoreinheit mehrere Widerstandstemperaturfühler aufweist, lediglich einer der Widerstandstemperaturfühler vor der Gehäuseöffnung ausgebildet.

Ein etwaiger strömender Gasstrom tritt bei einem Ausgleich des Druckunterschiedes im Gehäuse auf. Die mindestens eine Gehäuseöffnung des Gehäuses dient dem Ausgleich von Druckunterschieden zwischen dem Gehäuseinneren und dem Gehäuseäußeren. Derartige Druckunterschiede treten unter Umständen bereits im Normalbetrieb auf, da sich Batterien beim Laden und Entladen erwärmen und ergänzend auch wegen ablaufender chemischer Prozesse dabei gleichzeitig ihr Volumen ändern.

Die mindestens eine Sensoreinheit ist somit derart im Gehäuse des Batterieblocks positioniert, dass ein Widerstandstemperaturfühler in einem Gasstrom befindlich ist, der sich beim Ausgleich des Druckunterschieds im Gehäuse des Batterieblocks ausbildet. Ein am Widerstandstemperaturfühler vorbeiströmender Gasstrom führt zu einer Temperaturänderung des Widerstandstemperaturfühlers. Aufgrund einer Messung der Temperaturänderung am Widerstandstemperaturfühler kann daher auf eine Druckänderung im Gehäuse rückgeschlossen werden.

In einer besonders bevorzugten Ausführungsform der Erfindung ist der an der Gehäuseöffnung ausgebildete Widerstandstemperaturfühler aufgrund Stromfluss gegenüber seiner Umgebung elektrisch vorgeheizt. Ein zu detektierender Gasstrom führt zu einer Abkühlung des Widerstandstemperaturfühlers, die detektiert werden kann.

In einer weiteren Ausführungsform der Erfindung sind im Gehäuse des Batterieblocks mindestens zwei Widerstandstemperaturfühler ausgebildet. Ein zweiter Widerstandstemperaturfühler ist von der Gehäuseöffnung beabstandet ausgebildet und wird von einem etwaigen Gasstrom nicht umströmt, wobei der zweite Widerstandstemperaturfühler auf der ersten Sensoreinheit oder einer mindestens zweiten Sensoreinheit angeordnet ist.

Demnach ist es möglich im Gehäuse des Batterieblocks lediglich eine Sensoreinheit auszubilden. Auf dieser Sensoreinheit sind ein erster Widerstandstemperaturfühler sowie ein zweiter Widerstandstemperaturfühler ausgebildet. Der erste Widerstandstemperaturfühler ist vor der Gehäuseöffnung positioniert. Der zweite Widerstandstemperaturfühler ist in diesem Fall von der Gehäuseöffnung beabstandet ausgebildet.

Alternativ oder zusätzlich ist es möglich, dass bei Vorhandensein von mindestens zwei Widerstandstemperaturfühlern beide Widerstandstemperaturfühler unterschiedlichen Sensoreinheiten zugeordnet sind. Die Sensoreinheiten sind somit an unterschiedlichen Positionen im Gehäuse des Batterieblocks ausgebildet. Eine erste Sensoreinheit ist dabei derart positioniert, dass der erste Widerstandstemperaturfühler vor der Gehäuseöffnung positioniert ist. Eine zweite Sensoreinheit ist hingegen derart positioniert, dass der zweite Widerstandstemperaturfühler von der Gehäuseöffnung beabstandet ausgebildet ist. Ein etwaiger zweiter Widerstandstemperaturfühler ist im Gehäuse des Batterieblocks derart angeordnet bzw. positioniert, dass an dieser Stelle ein vergleichsweise geringerer Gasstrom zu erwarten ist.

Ein zweiter Widerstandstemperaturfühler dient als Referenz-Widerstandstemperaturfühler. Vorzugweise sind bei Vorhandensein von mehreren Widerstandstemperaturfühlern alle Widerstandstemperaturfühler baugleich ausgebildet. Vorzugsweise werden die Widerstandstemperaturfühler mit dem gleichen konstanten Strom beaufschlagt, der die Widerstandstemperaturfühler erwärmt. Vorzugsweise wird der Strom derart gewählt, dass die sich einstellende Temperatur der Widerstandstemperaturfühler ausreichend oberhalb einer Umgebungstemperatur liegt.

Wenn durch eine Störung in einer oder mehreren Batteriezellen ein Gas freigesetzt wird, steigt der Druck im Inneren des Gehäuses des Batterieblocks an. Der Druck entweicht durch die mindestens eine Gehäuseöffnung und führt zu einem Gasstrom. Ein auftretender Gasstrom kühlt den ersten (vor der Gehäuseöffnung positionierten) Widerstandstemperaturfühler in größerem Maße als einen zweiten (von der Gehäuseöffnung beabstandet ausgebildeten) Widerstandstemperaturfühler ab. Die Abkühlung verändert den elektrischen Widerstand des ersten Widerstandstemperaturfühlers. Die detektierte Widerstandsänderung in Relation zum zweiten Widerstandstemperaturfühler ist äußerst genau nachweisbar. Hierzu kann die Spannungsdifferenz gemessen und verstärkt werden. Aufgrund einer Nachverstärkung lässt sich eine äußerst hohe Auflösung erzielen.

Ein weiterer Aspekt der Erfindung betrifft eine Batterieeinheit mit mehreren in einem Batterieeinheitsgehäuse befindlichen Batterieblöcken, die Batteriezellen, insbesondere Lithium-Ionen-Batteriezellen, aufweisen, wobei das Batterieeinheitsgehäuse mindestens eine Batterieeinheitsgehäuseöffnung aufweist und in dem Batterieeinheitsgehäuse mindestens eine erfindungsgemäße erste Sensoreinheit befindlich ist.

Im Zusammenhang mit dem erfindungsgemäßen Batterieblock ergeben sich ähnliche oder gleiche Vorteile, wie diese bereits im Zusammenhang mit der erfindungsgemäßen Sensoreinheit genannt wurden.

Mit Hilfe der erfindungsgemäßen Batterieeinheit ist es möglich, die gesamte Batterieeinheit, bestehend aus mehreren Batterieblöcken, integral zu überwachen.

Alternativ oder zusätzlich ist es möglich, dass jeder einzelnen Batterieblock eine erfindungsgemäße erste Sensoreinheit aufweist. Eine Ausbildung jedes Batterieblocks mit einer Sensoreinheit ermöglicht eine schnellere Detektion eines Gasstroms sowie optional eine individuelle Abschaltung von Batterieblöcken, bezüglich derer eine Störung detektiert wird.

Die mindestens eine Sensoreinheit ist in einem Batterieeinheitsgehäuse ausgebildet, das die Batterieeinheit umschließt. Das Batterieeinheitsgehäuse weist mindestens eine Batterieeinheitsgehäuseöffnung auf, die zum Ausgleich von Druckunterschieden zwischen dem Batterieeinheitsgehäuseinnenraum und dem Batterieeinheitsgehäuseaußenraum dient. Derartige Druckunterschiede können bereits im Normalbetrieb der Batterieeinheit auftreten, da sich Batterien beim Laden und Entladen erwärmen und des Weiteren auch aufgrund ablaufender chemischer Prozesse eine gleichzeitige Volumenänderung auftreten kann. Die erste erfindungsgemäße Sensoreinheit ist vorzugsweise derart im Batterieeinheitsgehäuse positioniert, dass der mindestens eine Widerstandstemperaturfühler vor der Batterieeinheitsgehäuseöffnung positioniert ist, derart, dass der Widerstandstemperaturfühler in einem etwaigen vom Batterieeinheitsgehäuseinneren in Richtung der Batterieeinheitsgehäuseöffnung strömenden Gasstrom befindlich ist.

Es ist möglich, dass ein zweiter Widerstandstemperaturfühler in der Batterieeinheit ausgebildet ist. Ein zweiter Widerstandstemperaturfühler ist vorzugsweise von der Batterieeinheitsgehäuseöffnung beabstandet ausgebildet und wird von einem etwaigen Gasstrom nicht direkt umströmt, wobei der zweite Widerstandstemperaturfühler auf der ersten Sensoreinheit oder einer mindestens zweiten Sensoreinheit angeordnet ist. Wie bereits im Zusammenhang mit einem erfindungsgemäßen Batterieblock erläutert, dient ein mindestens zweiter Widerstandstemperaturfühler vorzugsweise als Referenz-Widerstandstemperaturfühler. Die diesbezüglichen Erläuterungen gelten auch im Zusammenhang mit einer Batterieeinheit.

Es ist möglich, dass mindestens zwei nicht notwendigerweise mechanisch starr verbundene Sensoreinheiten an verschiedenen Positionen innerhalb des Batterieeinheitsgehäuses, etwa innerhalb von unterschiedlichen Batterieblöcken derselben Batterieeinheit positioniert sind. Bevorzugt befindet sich bei einer derartigen Ausbildung der Erfindung auf jeder, vorzugsweise baugleichen, Sensoreinheit mindestens ein Widerstandstemperaturfühler.

Es ist möglich, dass Regelströme der Widerstandstemperaturfühler verschiedener Sensoreinheiten, die sich an verschiedenen Positionen befinden, verglichen und ausgewertet werden können. Mindestens zwei voneinander getrennte Sensoreinheiten bilden ein Sensornetzwerk. Aufgrund des Ausbildens eines Sensornetzwerks, umfassend mehrere Sensoreinheiten, ist es möglich, den Ort eines Gasausbruchs und somit den Ort einer Störung innerhalb einer Batterieeinheit einzugrenzen. Hierzu wird z. B. die zeitliche Folge, in der einzelne Sensoreinheiten einen Gasausbruch detektieren, erfasst. Eine Kombination aller Daten einzelner Sensoreinheiten ermöglicht es dann, geeignete Gegenmaßnahmen einzuleiten. Beispielsweise können dann betroffene Batteriezellen abgeschaltet werden.

Störeinflüsse, die auf alle Widerstandstemperaturfühler gleichermaßen einwirken, werden insbesondere durch Ausbilden von Referenz-Widerstandstemperaturfühlern weitestgehend eliminiert. Dies führt zu einer stabileren Detektion. Störeinflüsse können beispielsweise Temperaturschwankungen im Batteriegehäuse bzw. im Batterieeinheitsgehäuse aufgrund witterungsbedingter und klimatischer Änderungen sein. Derartige Temperaturschwankungen können auch auf die Leistungsaufnahme beim Laden oder die Leistungsabgabe beim Entladen einer Batterie zurückzuführen sein.

Es ist evident, dass eine etwaige Differenzbildung innerhalb eines Batteriegehäuses oder innerhalb eines Batterieeinheitsgehäuses stattfindet und dadurch Störeinflüsse von außen weitestgehend ausgeschlossen werden.

Die Ausbildung eines Batterieblocks oder einer Batterieeinheit mit einer erfindungsgemäßen Sensoreinheit weist gegenüber bekannten Drucksensoren mehrere Vorteile auf. Beispielsweise sind Drucksensoren bei einer Druckerhöhung im Batteriegehäuse aufgrund einer Freisetzung von Wasserstoff in einer Batteriezellen relativ unempfindlich, da die Druckmembran der Drucksensoren nicht druckdicht gegenüber Wasserstoff ist. Hier bieten die erfindungsgemäß ausgebildeten Sensoreinheiten, die einen Widerstandstemperaturfühler aufweisen, einen erheblichen Vorteil.

Des Weiteren ist es bekannt, dass sich der Gasdruck bei einem "thermal runaway" nur für eine äußerst kurze Zeit erhöht, da das Batteriegehäuse bzw. das Batterieeinheitsgehäuse nicht vollständig geschlossen ist. Zusätzlich entstehende Gase aufgrund eines thermal runaways führen daher nicht zu einer nennenswerten Druckerhöhung. Vielmehr entweichen die zusätzlich entstandenen Gase sofort durch die Gehäuseöffnung bzw. die Batterieeinheitsgehäuseöffnung. Auch in diesem Zusammenhang bietet die erfindungsgemäße Ausbildung einer Sensoreinheit aufgrund einer schnelleren Ansprechzeit erhebliche Vorteile.

Vorzugsweise wird die Querschnittsfläche, die der mindestens eine Widerstandstemperaturfühler einem zu detektierenden Gasstrom entgegensetzt, möglichst klein ausgebildet, um den zu detektierenden Gasstrom möglichst wenig zu beeinflussen. Daher sind erfindungsgemäß ausgebildete Batterieeinheiten oder Batterieblöcke ebenfalls hinsichtlich der exakten Bestimmung etwaiger Gasströme verbessert.

Ein etwaiger Gasstrom kann um den mindestens einen Widerstandstemperaturfühler je nach Positionierung des Widerstandstemperaturfühlers und abhängig von der auftretenden Gasgeschwindigkeit eine turbulente oder laminare Umströmung am Widerstandstemperaturfühler bilden. Da der Widerstandstemperaturfühler lediglich Abmaße im Millimeterbereich aufweist und die Oberseite, die Unterseite und mindestens zwei Stirnseiten größtenteils frei von Gas umströmbar sind, stellt die Geometrie des Widerstandstemperaturfühlers ein strömungsdynamisch kleines Hindernis dar, welches turbulente Gasstromanteile induzieren kann und den Wärmeübertrag an die Gasphase begünstigen kann.

Im Zusammenhang mit der erfindungsgemäßen Batterieeinheit ergeben sich ähnliche oder gleiche Vorteile, wie diese bereits im Zusammenhang mit der erfindungsgemäßen Sensoreinheit und/oder dem erfindungsgemäßen Batterieblock genannt sind.

Ein weiterer Aspekt der Erfindung betrifft ein Verfahren zur Detektion von Gasströmen in einem Batterieblock, insbesondere in einem erfindungsgemäßen Batterieblock, oder in einer Batterieeinheit, insbesondere in einer erfindungsgemäßen Batterieeinheit, mittels mindestens einer erfindungsgemäßen Sensoreinheit.

Erfindungsgemäß wird der mindestens eine Widerstandstemperaturfühler dauerhaft mit elektrischem Strom beaufschlagt. Eine Spannungsdifferenz und/oder eine zur Temperierung des Widerstandstemperaturfühlers notwendige Stromstärkenänderung wird/werden detektiert.

Vorzugsweise werden mindestens zwei Widerstandstemperaturfühler, die auf der ersten Sensoreinheit oder auf der ersten und einer mindestens zweiten Sensoreinheit angeordnet sind, in Reihe geschaltet dauerhaft mit elektrischem Strom beaufschlagt, wobei eine Spannungsdifferenz zwischen den mindestens zwei Widerstandstemperaturfühlern detektiert wird.

In einer alternativen Ausführungsform des Verfahrens werden die Temperaturen von mindestens zwei Widerstandstemperaturfühlern, die auf der ersten Sensoreinheit oder auf der ersten und einer mindestens zweiten Sensoreinheit angeordnet sind, jeweils mittels eines Temperaturreglers auf einen definierten Temperaturwert eingestellt und eine notwendige Regelstromänderung zur Erlangung des definierten Temperaturwertes detektiert, wobei die Regelströme beider Widerstandstemperaturfühler jeweils in Spannungssignale umgewandelt werden und mittels der Spannungssignale eine Spannungsdifferenz detektiert wird.

Als definierter Temperaturwert ist ein Sollwert der Temperatur zu verstehen, den die Widerstandstemperaturfühler annehmen bzw. aufweisen sollen. Aufgrund einer Kühlung des mindestens einen Widerstandstemperaturfühlers bei Auftreten eines Gasstroms fällt dessen Temperatur ab. Dieser Temperaturabfall wird durch eine Erhöhung des Regelstroms, der den Widerstandstemperaturfühler auf den definierten Temperaturwert erwärmt, kompensiert.

Mit Hilfe des erfindungsgemäßen Verfahrens wird, sofern mindestens zwei Widerstandstemperaturfühler ausgebildet sind, durch den Vergleich der Widerstände der Widerstandstemperaturfühler die Differenz der Gasströme, die die beiden Widerstandstemperaturfühler umströmen, bestimmt.

Hierbei ist bezüglich der Ansteuerung und des Auslesens der Widerstandstemperaturfühler zum einen eine serielle Ansteuerung möglich. Hierbei sind beide Widerstandstemperaturfühler in Reihe geschaltet, wobei ein konstanter Strom durch beide Widerstandstemperaturfühler fließt. An jedem Widerstandstemperaturfühler wird die Spannung gemessen. Die Spannungsdifferenz wird verstärkt und mit einem Spannungsschwellwert verglichen. Der Vorteil hinsichtlich einer derartigen seriellen Ansteuerung besteht darin, dass Störungen oder allgemein äußere Einflüsse, die auf beide Widerstandstemperaturfühler wirken, weitestgehend eliminiert werden.

Alternativ ist eine geregelte Ansteuerung hinsichtlich der Ansteuerung und des Auslesens von zwei Widerstandstemperaturfühlern möglich. Hierbei wird jeder Widerstandstemperaturfühler mit einem eigenen Temperaturregler auf die gleiche Temperatur geregelt. Beim Abkühlen der Widerstandstemperaturfühler aufgrund einer auftretenden Gasströmung werden die beiden Widerstandstemperaturfühler auf den ursprünglich eingestellten Temperaturwert geregelt. Der zusätzlich benötigte Regelstrom wird dabei als Maß für die lokale Abkühlung herangezogen. Der Regelstrom beider Widerstandstemperaturfühler wird mittels einer geeigneten Schaltung in ein Spannungssignal umgewandelt. Die derart erzeugten Spannungsdifferenzen zwischen dem ersten Widerstandstemperaturfühler und dem zweiten Widerstandstemperaturfühler werden wiederum mit einem Schwellwert verglichen.

Im Zusammenhang mit dem erfindungsgemäßen Verfahren werden die gleichen oder ähnliche Vorteile, wie diese bereits im Zusammenhang mit der erfindungsgemäßen Sensoreinheit, dem erfindungsgemäßen Batterieblock oder der erfindungsgemäßen Batterieeinheit erläutert wurden, erzielt.
Insgesamt gilt, dass mit Hilfe des Einsatzes einer erfindungsgemäßen Sensoreinheit oder einer Kombination von mindestens zwei Sensoreinheiten plötzliche Gasbewegungen in einem Batterieblock oder in einer Batterieeinheit, wie diese beispielsweise bei einem thermal runaway entstehen können, früh erkennbar sind. Mit Hilfe einer nachgeschalteten Logik kann unterschieden werden, ob es sich um einen Druckanstieg handelt, der durch Störungen verursacht wurde, oder ob systembedingte Druckänderungen detektiert wurden, wie diese im Normalbetrieb üblich sind. Systembedingte Druckänderungen, wie diese im Normalbetrieb üblich sind, sind beispielsweise durch Höhenunterschiede, Unterschiede der Last und des Ladungszustandes der Batterien oder durch damit verbundene thermische und chemische Veränderungen bedingt.

Es hat sich überraschend herausgestellt, dass massearme Widerstandstemperaturfühler, die vorzugsweise aus Platin gebildet sind bzw. platinbasierte Strukturen aufweisen, kleinste Gasströme detektieren können, sofern die Widerstandstemperaturfühler auf einem Träger in erfindungsgemäßer Art und Weise positioniert und mit diesem befestigt sind. Die erfindungsgemäßen Aspekte dienen somit insbesondere der Früherkennung von Störungen in Lithium-Ionen-Batterien, da geringste Gasvolumenströme detektierbar sind.

Nachfolgend wird die Erfindung anhand von Ausführungsbeispielen unter Bezug auf die beigefügten Zeichnungen näher erläutert.

In diesen zeigen:
- Fig. 1a-1c: eine erste erfindungsgemäße Ausführungsform hinsichtlich einer Sensoreinheit in verschiedenen Darstellungen und Konfigurationen;
- Fig. 2a und 2b: ein erfindungsgemäß ausgebildeter Batterieblock; und
- Fig. 3a und 3b: eine zweite Ausführungsform hinsichtlich einer erfindungsgemäßen Sensoreinheit in Draufsicht und Seitenansicht.

Im Folgenden werden für gleiche und gleich wirkenden Bauteile die gleichen Bezugsziffern verwendet.

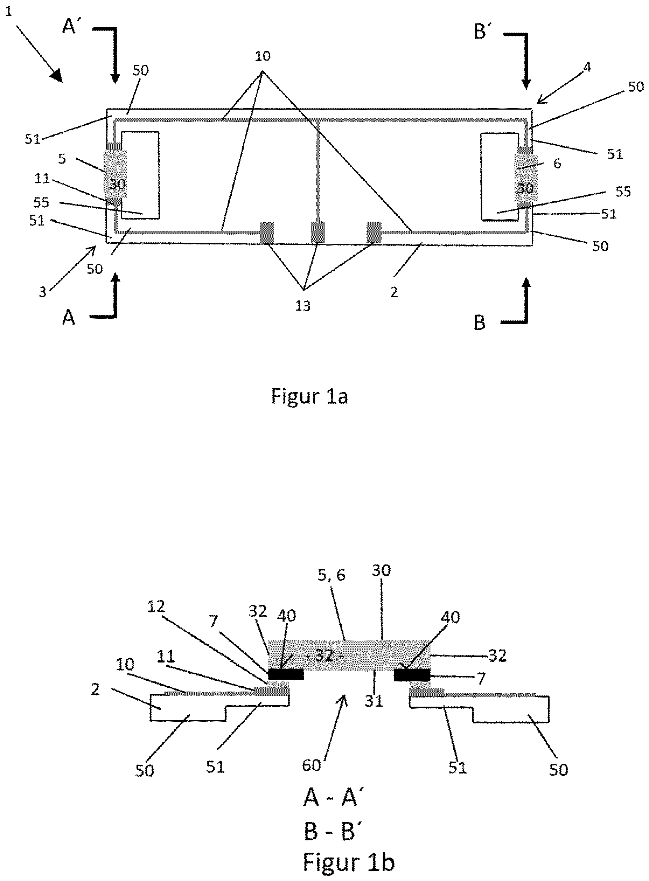

Die Fig. 1a-1c zeigen eine erste Ausführungsform hinsichtlich einer erfindungsgemäßen Sensoreinheit 1. Diese Sensoreinheit 1 weist einen Träger 2 auf. Der Träger ist, wie dies in der Draufsicht der Fig. 1a zu erkennen ist, symmetrisch aufgebaut. Die symmetrische Ausbildung betrifft insbesondere die Enden 3 und 4 des Trägers 2.

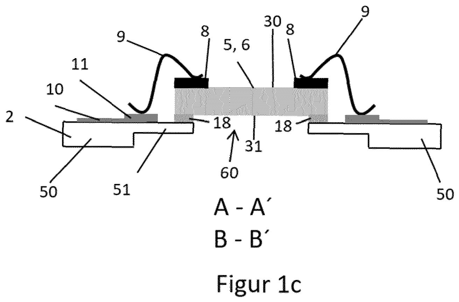

Die Fig. 1b und 1c zeigen Schnittdarstellungen gemäß Schnitt A-A' und B-B' in alternativen Ausführungsformen.

Ebenfalls zu erkennen sind ein erster Widerstandstemperaturfühler 5 sowie ein zweiter Widerstandstemperaturfühler 6. Die Widerstandstemperaturfühler 5 und 6 sind sowohl baulich als auch elektrisch mit dem Träger 2 verbunden. Zur baulichen Verbindung weist der Träger 2 im Bereich der Enden 3 und 4 jeweils zwei Befestigungslaschen 51 auf. Die Befestigungslaschen 51 sind, wie dies in den Schnittdarstellungen der Fig. 1b und 1c zu erkennen ist, zueinander weisend ausgebildet. Zwischen den beiden Befestigungslaschen 51 befindet sich kein weiteres Trägermaterial.

Es ist des Weiteren zu erkennen, dass die Befestigungslaschen 51 eine im Vergleich zu den angrenzenden Trägerabschnitten 50 geringere Dicke sowie einen geringeren Querschnitt aufweisen.

Außerdem sind Ausnehmungen 55 zu erkennen. Diese Ausnehmungen 55 sind derart ausgebildet, dass die Widerstandstemperaturfühler 5 und 6 lediglich an den Unterseiten 31 an jeweils zwei Abschnitten 40 mit den Befestigungslaschen 51 verbunden sind.

Es ist zu erkennen, dass die Widerstandstemperaturfühler 5 und 6 an der Oberseite 30 (zumindest gemäß Fig. 1b) sowie an allen vier Stirnseiten 32 vollständig von Gas umströmbar sind. Die Unterseiten 31 sind größtenteils ebenfalls von einem Gas umströmbar. Lediglich die zwei Befestigungsabschnitte bzw. Abschnitte 40 der Unterseiten 31 sind nicht von Gas umströmbar.

An den Befestigungslaschen 51 sind die Sensoren 5 und 6 am Träger 2 fixiert.

Hierzu weisen die Widerstandstemperaturfühler 5 und 6 an den Abschnitten 40 der Unterseiten 31 jeweils Kontaktpads 7 auf. Über diese Kontaktpads können die Widerstandstemperaturfühler 5 und 6 wiederum mit Kontaktpads 11 der Befestigungslaschen 51 verbunden werden. Hierzu kann, wie dies gemäß Konfiguration der Fig. 1b ersichtlich ist, zwischen den Kontaktpads 7 und 11 eine weitere Verbindungsschicht 12 ausgebildet werden. Die Verbindungsschicht 12 kann durch eine metallhaltige Sinterpaste oder durch einen Leitkleber gebildet werden.

Die in Fig. 1b mögliche Verbindung zwischen den Widerstandstemperaturfühlern 5 und 6 und dem Träger 2 ermöglicht gleichzeitig eine bauliche sowie elektrische Verbindung zwischen den Widerstandstemperaturfühlern 5 und 6 und dem Träger 2. Die Widerstandstemperaturfühler 5 und 6 sind in diesem Fall vorzugsweise als Flipchip-Sensoren ausgebildet.

Aufgrund der im Vergleich zu angrenzenden Trägerabschnitten 50 geringeren Dicke sowie aufgrund des geringeren Querschnittes der Befestigungslaschen 51 wird die Wärmeleitung von den Widerstandstemperaturfühlern 5, 6 zum Träger 2 reduziert.

Wie in Fig. 1b des Weiteren zu erkennen ist, ist unterhalb der Unterseite 31 der Widerstandstemperaturfühler 5 und 6 überwiegend kein Abschnitt des Trägers 2 ausgebildet. Lediglich die Befestigungslaschen 51 sind unterhalb der Unterseite 31 ausgebildet. Bei einer gedachten Auflage der Sensoreinheit 1 auf einer Auflagefläche, wobei der Träger 2 auf dieser Auflagefläche aufliegt, wird in vertikaler Erstreckung von dieser Auflagefläche unterhalb der Unterseite 31 größtenteils kein weiteres Trägermaterial ausgebildet. Es wird somit unterhalb der Unterseite der Widerstandstemperaturfühler 5 und 6 ein Freiraum 60 gebildet, der in die Ausnehmungen 55 des Trägers übergeht. Es kann somit nahezu vollumfänglich, mit Ausnahme der jeweiligen (Befestigungs)abschnitte 40, der Widerstandstemperaturfühler eine mit Gas umströmbare Widerstandstemperaturfühler-Oberfläche zur Verfügung gestellt werden.

In der Schnittdarstellung gemäß Fig. 1b/Fig. 1c ist ebenfalls dargestellt, dass die Widerstandstemperaturfühler 5, 6 bei einer gedachten Ablage der Sensoreinheit 1 auf einer Ablagefläche in einer Ebene ausgebildet sind, die oberhalb des Trägers ausgebildet ist. Mit anderen Worten sind die Widerstandstemperaturfühler 5 und 6 vollständig oberhalb eines Trägers 2 ausgebildet. Dies ist nicht streng mathematisch zu verstehen und betrifft insbesondere den Bereich der Ausnehmung 60.

In Fig. 1c wird eine alternative elektrische Verbindung zwischen den Widerstandstemperaturfühlern 5 und 6 und dem Träger 2 dargestellt. Die Widerstandstemperaturfühler 5 und 6 weisen hierzu Bondpads 8 auf. Diese sind auf den Oberseiten 30 ausgebildet. Über Drähte 9 kann eine elektrische Verbindung mit den Kontaktpads 11 erfolgen, die im Bereich der Befestigungslaschen 51 ausgebildet. Zur baulichen Fixierung der Widerstandstemperaturfühler 5 und 6 am Sensor 2 bzw. an den Befestigungslaschen 51 kann beispielsweise eine kleine Klebeschicht 18 ausgebildet sein.

Auf der in Fig. 1a dargestellten Oberseite des Trägers 2 sind elektrische Leiterbahnen 10 zu erkennen. Die Widerstandstemperaturfühler 5 und 6 sind mit diesen elektrischen Leiterbahnen elektrisch verbunden. Dies erfolgt mittels der Kontaktpads 11. Am Ende der Leiterbahnen 10 befinden sich Kontaktbereiche 13. An diesen Kontaktbereichen 13 können Zuleitungen zu einer Kontroll- und/oder Steuereinheit befestigt werden.

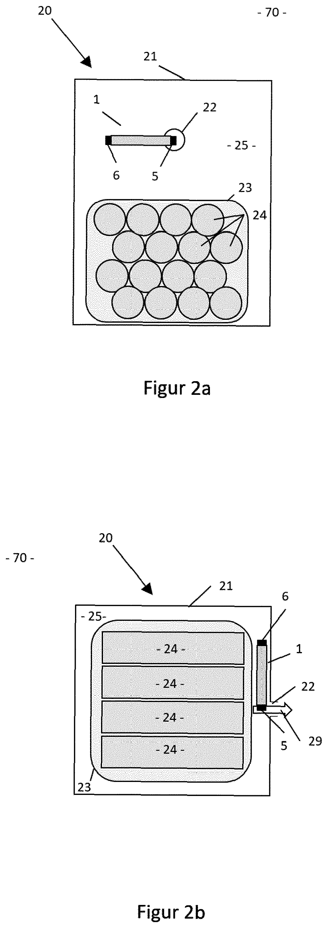

In den Fig. 2a und 2b werden verschiedene Seitenansichten hinsichtlich eines erfindungsgemäßen Batterieblocks dargestellt. Der Batterieblock 20 umfasst ein Batteriegehäuse 21. Das Batteriegehäuse 21 weist eine Gehäuseöffnung 22 auf. Ansonsten ist das Batteriegehäuse 21 geschlossen. Im Batteriegehäuse 21 sind mehrere Lithium-Ionen-Zellen bzw. Batteriezellen 24 ausgebildet. Diese Batteriezellen 24 sind wiederum in einer Ummantelung 23 befindlich.

Es ist zu erkennen, dass im Gehäuseinneren 25 eine Sensoreinheit 1 ausgebildet ist. Diese Sensoreinheit 1 weist zwei Widerstandstemperaturfühler 5 und 6 auf. Der erste Widerstandstemperaturfühler 5 ist dabei vor der Gehäuseöffnung 22 positioniert, so dass der Widerstandstemperaturfühler 5 in einem etwaigen vom Gehäuseinneren 25 in Richtung der Gehäuseöffnung 22 strömenden Gasstrom 25 (siehe Fig. 2b) befindlich ist.

Der zweite Widerstandstemperaturfühler 6 ist hingegen von der Gehäuseöffnung 22 beabstandet ausgebildet, so dass dieser von einem etwaigen Gasstrom 29 nicht direkt umströmt wird.

Im dargestellten Beispiel ist der zweite Widerstandstemperaturfühler 6 Teil der gemeinsamen Sensoreinheit 1. In einer alternativen Ausführungsform der Erfindung wäre es möglich, dass die beiden Widerstandstemperaturfühler 5 und 6 auf voneinander separierten Sensoreinheiten ausgebildet sind.

### Erstes Anwendungsbeispiel:

Das Batteriegehäuse 21 umfasst beispielsweise ein freies Volumen im Gehäuseinneren 25 von 0,05 m³. Das freie Volumen umfasst die Bereiche innerhalb des Batteriegehäuses 20, die nicht durch kondensierte Materie wie Batterien, Kühlflüssigkeit, Gehäusekomponenten, Elektronik oder Sensorik besetzt sind. Im freien Volumen befindet sich Gas unter Atmosphärendruck. Die Gehäuseöffnung 22 verbindet das freie Volumen mit dem unter Atmosphärendruck stehenden Außenraum 70. Die Gehäuseöffnung 22 weist eine Fläche von etwa 4 cm² auf.

Die Sensoreinheit 1 ist im Gehäuseinneren 25 des Batteriegehäuses 21 derart ausgerichtet, dass die sensitive Fläche des Widerstandstemperaturfühlers 5 mit maximaler Oberfläche dem Gasstrom 29 entgegensteht.

Im Normalbetrieb beträgt die Temperatur im Batteriegehäuse 21 ca. 23 °C. Die Widerstandstemperaturfühler 5 und 6 sind im dargestellten Beispiel seriell geschaltet und werden beide mit einem konstanten Strom von beispielsweise 1-5 mA beaufschlagt. Dieser konstante Strom erwärmt die beiden Widerstandstemperaturfühler 5 und 6 beispielsweise auf jeweils über 25 °C. Diese Temperatur liegt an den Widerstandstemperaturfühlern 5 und 6 an, wenn sich diese nicht in einem gerichteten und damit kühlenden Gasstrom 29 befinden.

Im Falle eines thermal runaways einer Batteriezellen 24 werden Gase innerhalb des Batteriegehäuses 21 freigesetzt. Die freigesetzten Gase erzeugen einen Druckanstieg innerhalb des Batteriegehäuses 21. Der sich aufbauende Druck im Batteriegehäuse 21 kann innerhalb weniger Sekunden um bis zu 10.000 Pascal (100 mbar) ansteigen. Dieser Druckanstieg entspricht in dem Batteriegehäuse 21 einem Volumenanstieg von 5.000 cm³ unter bei Normaldruck und -Temperatur. Der Überdruck bzw. das neu entstandene Gasvolumen entweicht über die Gehäuseöffnung 22 innerhalb von etwa 10 Sekunden in den Außenraum 70. Im Mittel beträgt die Volumenstromdichte aus dem Batteriegehäuse 21 500 cm³/s. Folglich beträgt die Gasstromgeschwindigkeit im Bereich der Gehäuseöffnung 22 im Mittel 1,25 m/s. Dieser Gasstrom führt zu einer deutlich nachweisbaren Kühlung des Widerstandstemperaturfühlers 5. Da der zweite Widerstandstemperaturfühler 6 sich nicht bzw. nicht direkt im Gasstrom 29 befindet, ist eine derartige Abkühlung an diesem Widerstandstemperaturfühler 6 nicht festzustellen.

Der elektrische Widerstand des Widerstandstemperaturfühlers 5, der mit 3 mA betrieben wird, beträgt ungekühlt an Luft 1.328,0 Ohm (85 °C). Während des Druckanstiegs im Batteriegehäuse 21 fällt der Widerstand auf 1.320,4 Ohm ab. Dies ist durch den kühlenden Gasstrom 29 bedingt. Die Widerstandsänderung entspricht einer Temperaturabnahme des Widerstandstemperaturfühlers 5 von 2 Kelvin.

Der elektrische Widerstand des Widerstandstemperaturfühlers 6, der sich nicht im Gasstrom 29 befindet, beträgt während des thermal runaways unverändert 1.328,0 Ohm.

Es ist möglich, dass die Widerstandswerte der beiden Widerstandstemperaturfühler 5 und 6 von einer Kontroll-Einheit, die außerhalb des Batterieblocks 20, insbesondere außerhalb der übergeordneten Batterieeinheit angeordnet ist, kontinuierlich ausgelesen werden. Sofern die Kontrolleinheit innerhalb von 3 Sekunden eine Widerstandsänderung beim Widerstandstemperaturfühler 5 von > 1 Ohm registriert und der Widerstand des Widerstandstemperaturfühlers 6 nahezu unverändert bleibt, wird beispielsweise ein Alarm aktiviert. Dies zeigt, dass Druckänderungen von 500 - 10.000 Pascal in einem Batteriegehäuse 21 sehr präzise nachgewiesen werden können und dass mit diesem Messsignal Maßnahmen zur Warnung oder Abschaltung des Batterieblocks 20 eingeleitet werden können.

### Zweites Anwendungsbeispiel:

Ein weiteres Beispiel beruht darauf, dass ein Druckanstieg im Batteriegehäuse 21, hervorgerufen durch eine Vorschädigung einer Batteriezelle 24, insbesondere einer Lithium-Ionen-Batteriezelle, lediglich 2000 Pascal beträgt. Dieser Druckanstieg entspricht in dem Batteriegehäuse 21 einem Volumenanstieg von 1.000 cm³ unter Atmosphärendruck. Der Überdruck bzw. das neu entstandene Gasvolumen entweicht über die Gehäuseöffnung 22 innerhalb von 10 Sekunden in den Außenraum 70.

Im Mittel beträgt die Volumenstromdichte aus dem Batteriegehäuse 21 100 cm³/s. Folglich beträgt die Gasstromgeschwindigkeit im Bereich der Gehäuseöffnung 22 im Mittel 0,25 m/s. Dieser Gasstrom führt zu einer sicher nachweisbaren Kühlung des Widerstandstemperaturfühlers 5.

Der elektrische Widerstand des Widerstandstemperaturfühlers 5, der mit 3 mA betrieben wird, beträgt ungekühlt an Luft 1.328 Ohm (85 °C). Während des Druckanstiegs im Batteriegehäuse 21 fällt der Widerstand auf 1.324,6 Ohm ab. Dies ist durch den kühlenden Gasstrom 29 bedingt. Die Widerstandsänderung entspricht einer Temperaturabnahme des Widerstandstemperaturfühlers 5 um 0,9 Kelvin.

Der elektrische Widerstand des Widerstandstemperaturfühlers 6 beträgt während des thermal runaways unverändert 1.328,0 Ohm.
Somit wird gezeigt, dass auch geringe Druckanstiege von 2.000 Pascal im Batteriegehäuse 21, wie diese beispielsweise in der Vorphase des thermal runaways auftreten, nachweisbar sind.

### Drittes Anwendungsbeispiel:

Das prinzipielle Vorgehen entspricht den Anwendungsbeispielen 1 und 2, mit dem Unterschied, dass die Temperatur im Batteriegehäuse 21 ca. 70 °C beträgt. Die beiden Widerstandstemperaturfühler 5 und 6 werden beide mit einem konstanten Strom von beispielsweise 20 mA beaufschlagt. Dieser konstante Strom erwärmt die beiden Widerstandstemperaturfühler 5 und 6 auf jeweils 161,1 °C, sofern sich diese nicht in einem gerichteten und damit kühlenden Gasstrom 29 befinden.

Der Widerstand der beiden Widerstandstemperaturfühler 5 und 6 beträgt in diesem Fall 1.614,6 Ohm. Eine Temperaturerniedrigung von 2 Kelvin des im Gasstrom 29 stehenden Widerstandstemperaturfühlers 5 führt zu einer Widerstandsänderung auf 1.607,2 Ohm. Dieses Anwendungsbeispiel zeigt, dass mittels einer erfindungsgemäßen Sensoreinheit 1 auch bei Temperaturen von 70 °C präzise Temperaturunterschiede zwischen zwei Widerstandstemperaturfühlern 5 und 6 nachgewiesen werden können.

Bezüglich aller Anwendungsbeispiele besteht zusätzlich noch die Möglichkeit, alle Sensoreinheiten 1 bzw. alle Widerstandstemperaturfühler in einer zentralen intelligenten Elektronik miteinander zu korrelieren. Dies ermöglicht das Bereitstellen verschiedener Informationen. Bei diesen Informationen kann es sich beispielsweise um Feststellung der Position im Batterieblock mit erhöhter Gasbewegung handeln. Des Weiteren können Informationen hinsichtlich der Positionen im Batterieblock ermittelt werden, an denen keine erhöhten Gasbewegungen festzustellen sind. Des Weiteren können Informationen hinsichtlich von vorhandenen Referenz-Widerstandstemperaturfühlern ermittelt und ausgewertet werden.

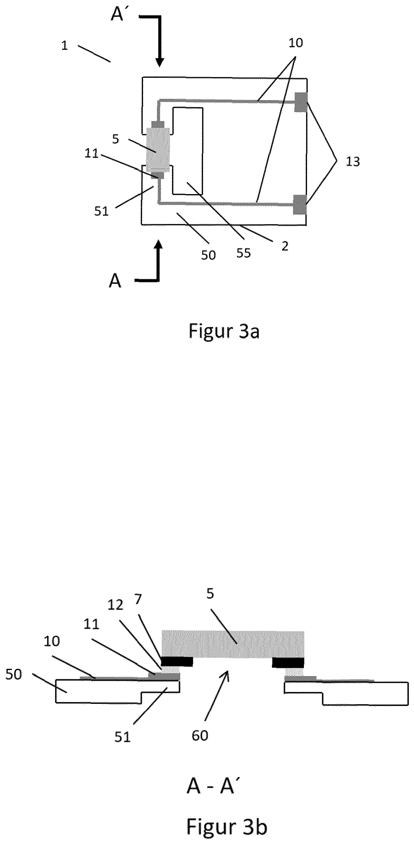

Eine weitere Ausführungsform hinsichtlich einer erfindungsgemäßen Sensoreinheit 1 ist in den Fig. 3a und 3b dargestellt. Die Fig. 3a zeigt eine Draufsicht auf die erfindungsgemäße Sensoreinheit 1. In Fig. 3b wird hingegen ein Schnitt A-A' dargestellt.

In dieser Ausführungsform der Erfindung ist auf dem Träger 2 lediglich ein Widerstandstemperaturfühler 5 ausgebildet. Dieser Widerstandstemperaturfühler 5 ist auf Befestigungslaschen 51 positioniert und dort mit dem Träger befestigt. Die Verbindung des Widerstandstemperaturfühlers 5 erfolgt wie dies bereits im Zusammenhang mit Fig. 1b dargestellt und erläutert wurde. Der Träger 2 der Fig. 3a weist wiederum eine Ausnehmung 55 auf, so dass auch eine Verbindung zu einem Freiraum 60 herstellbar ist. Der Widerstandstemperaturfühler 5 ist als Flipchip-Sensor ausgebildet. Auf der Oberseite des Trägers 2 sind zwei elektrische Leiterbahnen 10 ausgebildet, mit welchen der Widerstandstemperaturfühler 5 elektrisch verbunden ist. Die elektrischen Leiterbahnen 10 weisen an den Enden Kontaktbereiche 13 auf, die zur Kontaktierung des Widerstandstemperaturfühlers 5 und weiteren Anschlussdrähten dienen.

Eine Sensoreinheit 1, wie diese in den Fig. 3a und 3b dargestellt ist. Könnte in einer Batterieeinheit vor unterschiedlichen Auslassöffnungen von Gehäusen 21 einzelner Batterieblöcke 20 positioniert werden. In Verbindung mit einer elektronischen Schaltung können die Steuersignale der verschiedenen Widerstandstemperaturfühler miteinander korreliert und hinsichtlich hinterlegter Schwellwerte untersucht werden. Die Verstärkung der Differenz zwischen Schwellwert und aktuellem Wert der Widerstandstemperaturfühler ermöglicht auch hier eine Steigerung der Auflösung. Eine detektiertes Differenzsignal erlaubt für alle Ausführungsbeispiele eine sogenannte Null-Punkts-Detektion. Sobald diese Differenz null ergibt, ist der Schwellwert bereits erreicht. Vorzeichenwechsel lassen sich besonders einfach detektieren.

Aufgrund einer Kombination mehrerer Sensoreinheiten 1, wie diese in Fig. 3a, 3b dargestellt sind, könnte auf einfache Art und Weise auf den genauen Ursprungsort eines thermal runaways rückgeschlossen werden. Ein die Störung verursachender Batterieblock könnte somit relativ schnell und einfach abgeschaltet werden.

### Bezugszeichen

- 1: Sensoreinheit
- 2: Träger
- 3: Ende Träger
- 4: Ende Träger
- 5: erster Widerstandstemperaturfühler
- 6: zweiter Widerstandstemperaturfühler
- 7: Kontaktpad (Widerstandstemperaturfühler)
- 8: Bondpad
- 9: Draht
- 10: elektrische Leiterbahn
- 11: Kontaktpad (Träger)
- 12: Verbindungsschicht
- 13: Kontaktbereich
- 18: Klebeschicht
- 20: Batterieblock
- 21: Gehäuse
- 22: Gehäuseöffnung
- 23: Ummantelung
- 24: Batteriezelle
- 25: Gehäuseinneres
- 29: Gasstrom
- 30: Oberseite
- 31: Unterseite
- 32: Stirnseite
- 40: Abschnitt Unterseite
- 50: Trägerabschnitt
- 51: Befestigungslasche
- 55: Ausnehmung
- 60: Freiraum
- 70: Außenraum

## Patentansprüche

1. Sensoreinheit (1) zur Detektion von Gasströmen in einem Batterieblock oder in
einer Batterieeinheit, wobei
die Sensoreinheit (1) einen Träger (2) und mindestens einen Widerstandstemperaturfühler (5, 6) aufweist, wobei
der mindestens eine Widerstandstemperaturfühler (5, 6) mindestens sechs Seiten, nämlich eine Oberseite (30), eine Unterseite (31) und vier Stirnseiten (32), aufweist, wobei
der Widerstandstemperaturfühler (5, 6) derart mit dem Träger (2) verbunden ist, dass die Oberseite (30), die Unterseite (31) und mindestens zwei Stirnseiten (32) zumindest abschnittsweise von einem Gas umströmbar sind.

2. Sensoreinheit (1) nach Anspruch 1,
**dadurch gekennzeichnet, dass**
der mindestens eine Widerstandstemperaturfühler (5, 6) an höchstens zwei Abschnitten (40) einer Seite, vorzugsweise an der Unterseite (31), mittel- oder unmittelbar mit dem Träger (2) verbunden ist.

3. Sensoreinheit (1) nach Anspruch 1 oder 2,
**dadurch gekennzeichnet, dass**
der Träger (2) mindestens zwei Befestigungslaschen (51) aufweist, wobei die mindestens zwei Befestigungslaschen (51) zueinander weisend ausgebildet sind und der mindestens eine Widerstandstemperaturfühler (5, 6) an den Befestigungslaschen (51) mittel- oder unmittelbar mit der Träger (2) verbunden ist.

4. Sensoreinheit (1) nach Anspruch 3,
**dadurch gekennzeichnet, dass**
mindestens eine Befestigungslasche, vorzugsweise die Befestigungslaschen (51), eine im Vergleich zu angrenzenden Trägerabschnitten (50) zumindest abschnittsweise geringere Dicke und/oder geringeren Querschnitt aufweist/aufweisen.

5. Sensoreinheit (1) nach einem der vorangegangenen Ansprüche,
**dadurch gekennzeichnet, dass**
der Träger (2) zwei Längsenden (3, 4) aufweist, wobei an jedem Längsende (3, 4) ein Widerstandstemperaturfühler (5, 6) ausgebildet ist.

6. Sensoreinheit (1) nach einem der vorangegangenen Ansprüche,
**dadurch gekennzeichnet, dass**
unterhalb der Unterseite (31) des mindestens einen Widerstandstemperaturfühlers (5, 6) überwiegend keine Abschnitte des Trägers (2) ausgebildet sind.

7. Batterieblock (20) mit mehreren in einem Gehäuse (21) befindlichen Batteriezellen (24), insbesondere Lithium-Ionen-Batteriezellen, wobei das Gehäuse (21) mindestens eine Gehäuseöffnung (22) aufweist und in dem Gehäuse (21) mindestens eine erste Sensoreinheit (1) nach einem der Ansprüche 1 bis 6, befindlich ist.

8. Batterieblock (20) nach Anspruch 7,
**dadurch gekennzeichnet, dass**
die erste Sensoreinheit (1) derart im Gehäuse (21) positioniert ist, dass der mindestens eine Widerstandstemperaturfühler (5) vor der Gehäuseöffnung (22) positioniert ist derart, dass der Widerstandstemperaturfühler (5) in einem etwaigen vom Gehäuseinneren (25) in Richtung der Gehäuseöffnung (22) strömendem Gasstrom (29) befindlich ist.

9. Batterieblock (20) nach Anspruch 8,
**dadurch gekennzeichnet, dass**
ein zweiter Widerstandstemperaturfühler (6) von der Gehäuseöffnung (22) beabstandet ausgebildet ist und von dem etwaigen Gasstrom (29) nicht direkt umströmt wird, wobei der zweite Widerstandstemperaturfühler (6) auf der ersten Sensoreinheit (1) oder einer mindestens zweiten Sensoreinheit (1) angeordnet ist.

10. Batterieeinheit mit mehreren in einem Batterieeinheitsgehäuse befindlichen Batterieblöcken, die Batteriezellen, insbesondere Lithium-Ionen-Batteriezellen, aufweisen, wobei das Batterieeinheitsgehäuse mindestens eine Batterieeinheitsgehäuseöffnung aufweist und in dem Batterieeinheitsgehäuse mindestens eine erste Sensoreinheit (1) nach einem der Ansprüche 1 bis 6 befindlich ist.

11. Batterieeinheit nach Anspruch 10,
**dadurch gekennzeichnet, dass**
die erste Sensoreinheit (1) derart im Batterieeinheitsgehäuse positioniert ist, dass der mindestens eine Widerstandstemperaturfühler (5) vor der Batterieeinheitsgehäuseöffnung positioniert ist derart, dass der Widerstandstemperaturfühler (5) in einem etwaigen vom Batterieeinheitsgehäuseinneren in Richtung der Batterieeinheitsgehäuseöffnung strömendem Gasstrom (29) befindlich ist.

12. Batterieeinheit nach Anspruch 11,
**dadurch gekennzeichnet, dass**
ein zweiter Widerstandstemperaturfühler (6) von der Batterieeinheitsgehäuseöffnung beabstandet ausgebildet ist und von einem etwaigen Gasstrom (29) nicht direkt umströmt wird, wobei der zweite Widerstandstemperaturfühler (6) auf der ersten Sensoreinheit (1) oder einer mindestens zweiten Sensoreinheit (1) angeordnet ist.

13. Verfahren zur Detektion von Gasströmen in einem Batterieblock, insbesondere in einem Batterieblock (20) nach einem der Ansprüche 7 bis 9, oder in einer Batterieeinheit, insbesondere in einer Batterieeinheit nach einem der Ansprüche 10 bis 12, mittels mindestens einer Sensoreinheit (1) nach einem der Ansprüche 1 bis 6,
**dadurch gekennzeichnet, dass**
der mindestens eine Widerstandstemperaturfühler (5, 6) dauerhaft mit elektrischem Strom beaufschlagt wird und eine Spannungsdifferenz und/oder eine zur Temperierung des Widerstandstemperaturfühlers notwendige Stromstärkenänderung detektiert wird/werden.

14. Verfahren nach Anspruch 13,
**dadurch gekennzeichnet, dass**
mindestens zwei Widerstandstemperaturfühler (5, 6), die auf der ersten Sensoreinheit (1) oder auf der ersten und einer mindestens zweiten Sensoreinheit (1) angeordnet sind, in Reihe geschaltet dauerhaft mit elektrischem Strom beaufschlagt werden, wobei eine Spannungsdifferenz zwischen den mindestens zwei Widerstandstemperaturfühlern (5, 6) detektiert wird.

15. Verfahren nach Anspruch 13,
**dadurch gekennzeichnet, dass**
die Temperatur von mindestens zwei Widerstandstemperaturfühlern (5, 6), die auf der ersten Sensoreinheit (1) oder auf der ersten und einer mindestens zweiten Sensoreinheit (1) angeordnet sind, jeweils mittels eines Temperaturreglers auf einen definierten Temperaturwert eingestellt wird und eine notwendige Regelstromänderung zur Erlangung des definierten Temperaturwerts detektiert wird und die Regelströme beider Widerstandstemperaturfühler jeweils in Spannungssignale umgewandelt werden und mittels der Spannungssignale eine Spannungsdifferenz detektiert wird.
